(19) Europäisches Patentamt
European Patent Office
Office européen des brevets

(11) **EP 4 179 265 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **21742726.9**

(22) Anmeldetag: **23.06.2021**

(51) Internationale Patentklassifikation (IPC):
*H02P 6/08* (2016.01)     *F24F 11/77* (2018.01)
*F24F 11/39* (2018.01)    *F24F 140/50* (2018.01)

(52) Gemeinsame Patentklassifikation (CPC):
**H02P 6/08; F24F 11/39; F24F 11/77;** F24F 2140/50;
Y02B 30/70

(86) Internationale Anmeldenummer:
**PCT/EP2021/067085**

(87) Internationale Veröffentlichungsnummer:
**WO 2022/008241 (13.01.2022 Gazette 2022/02)**

(54) **VERFAHREN UND VENTILATORSYSTEM ZUR ERMITTLUNG EINES AKTUELLEN ARBEITSPUNKTES EINER VENTILATOREINHEIT**

METHOD AND VENTILATOR SYSTEM FOR ASCERTAINING A CURRENT OPERATING POINT OF A VENTILATOR UNIT

PROCÉDÉ ET SYSTÈME DE VENTILATEUR POUR VÉRIFIER UN POINT DE FONCTIONNEMENT ACTUEL D'UNE UNITÉ DE VENTILATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2020 DE 102020118251**

(43) Veröffentlichungstag der Anmeldung:
**17.05.2023 Patentblatt 2023/20**

(73) Patentinhaber: **ebm-papst Mulfingen GmbH & Co. KG**
**74673 Mulfingen (DE)**

(72) Erfinder:
• **BRISENHEIM, Erik**
**14172 Segeltorp (SE)**
• **HESS, Stefan**
**44357 Dortmund (DE)**
• **FIELSCH, Sven**
**42369 Wuppertal (DE)**

(74) Vertreter: **Rüger Abel Patentanwälte PartGmbB**
**Webergasse 3**
**73728 Esslingen a. N. (DE)**

(56) Entgegenhaltungen:
WO-A1-2019/166448     DE-A1- 102013 204 135
DE-A1- 102018 117 514     DE-A1- 102018 211 869
DE-A1- 4 329 346     DE-T2- 60 016 684

**Beschreibung**

Die Erfindung betrifft ein Verfahren und eine Vorrichtung zur Ermittlung eines aktuellen Arbeitspunktes einer Ventilatoreinheit. Die Ventilatoreinheit weist einen Ventilator und wenigstens einen Filter auf. Der Ventilator ist dazu eingerichtet, eine Luftströmung durch den wenigstens einen Filter zu erzeugen. Dadurch kann beispielsweise eines Strömungswiderstandsänderung entlang eines Strömungspfades bestimmt werden, in dem die Ventilatoreinheit angeordnet ist, insbesondere zur Ermittlung eines Zustands des wenigstens eines Filters einer Ventilatoreinheit.

Durch Veränderungen im Strömungspfad, die stromaufwärts oder stromabwärts der Ventilatoreinheit stattfinden können, kann sich der Strömungswiderstand für die vom Ventilator erzeugte Luftströmung ändern. Eine Strömungswiderstandsänderung kann beispielsweise durch die Veränderung eines Strömungsquerschnitts für die Luftströmung stromaufwärts oder stromabwärts des Ventilators hervorgerufen werden, beispielsweise wenn eine Zuströmöffnung oder eine Abströmöffnung vergrößert oder verkleinert wird. Eine Strömungswiderstandsänderung kann auch durch das im Laufe der Zeit stattfindende Ansammeln von Partikeln an dem wenigstens einen Filter hervorgerufen werden. Die Atmosphäre der Umgebung kann mit Partikeln beladen sein. Im Laufe der Zeit können Partikel, die in der Luftströmung transportiert werden, durch den Filter aufgefangen werden. Die Fähigkeit des Filters, eine hindurchgehende Luftströmung mit einem gewünschten Volumenstrom zu ermöglichen, nimmt dabei ab. Der Filter muss daher von Zeit zu Zeit gereinigt oder ausgetauscht werden.

EP 2 620 202 B1 beschreibt ein Verfahren und eine Vorrichtung zum Überwachen eines Luftfilterzustands. Dabei wird ein Motor eines Ventilators über einen Frequenzumrichter gesteuert. Aus dem Betrieb des Frequenzumrichters werden das Drehmoment und die Drehzahl ermittelt und der Frequenzumrichter schätzt basierend darauf die mechanische Leistung des Ventilators ab. Für den Ventilator werden charakteristische Kurven bestimmt, die einen Zusammenhang zwischen der mechanischen Leistung und der Durchflussrate angeben. Abhängig von den charakteristischen Kurven, der mechanischen Leistung und der Drehzahl wird dann der aktuelle Arbeitspunkt ermittelt, woraus sich die Durchflussrate des Ventilators ergibt. Daraus kann ein aktueller Wert eines Betriebsparameters ermittelt werden, beispielsweise der dynamische Strömungswiderstand oder eine spezifische Ventilatorleistung. Wird dieser Betriebsparameter mit einem ursprünglichen Wert des Betriebsparameters bei nicht verschmutzten Filter verglichen, kann daraus ein Maß für die Verschmutzung des Filters abgeleitet werden.

In US 2003/0052791 A1 wird vorgeschlagen, den Zustand eines Filters mittels eines Sensors zu überwachen, der den Volumenstrom der Luftströmung durch den Filter erfasst. Der Nachteil besteht darin, dass ein zusätzlicher Volumenstromsensor am Filter vorhanden sein muss.

US 8 672 733 B2 beschreibt ein Verfahren, bei dem ein Ventilator geregelt wird, um Änderungen in der Luftströmung zu berücksichtigen und beispielsweise ein teilweises Verstopfen eines Filters zu kompensieren.

Ein System und ein Verfahren zur Bestimmung des Zustands eines Filters ist aus US 2003/0070544 A1 bekannt. Dort werden die Drehzahl und der Motorstrom eines Ventilatormotors ausgewertet, um den Beladungszustand des Filters mit Partikeln zu erkennen. In Abhängigkeit vom Motorstrom kann angezeigt werden, ob der Zustand des Filters noch akzeptabel ist oder nicht.

Aus US 2005/0247194 A1 ist es bekannt, einen Filterzustand basierend auf einem Modell vorherzusagen. Dazu wird ein Widerstand ermittelt, den der Filter der Luftströmung entgegensetzt. Basierend auf diesem Widerstand wird eine Erfassungsstatistik ermittelt, um dann den aktuellen Zustand des Filters und die verbleibende Lebensdauer zu bestimmen. Die Erfassungsstatistik kann beispielsweise mit einem Schwellenwert verglichen werden und bei Überschreiten des Schwellenwertes kann auf einen verstopften Filter geschlossen werden. Die Erfassungsstatistik berücksichtigt den zeitlichen Verlauf der ermittelten Widerstandswerte und kann beispielsweise ein Mittelwert von mehreren einzelnen Widerstandswerten sein.

DE 10 2015 012 462 B3 beschreibt ein Verfahren und eine Vorrichtung zum sensorlosen Regeln eines Ventilators. Dabei soll auf die Verwendung eines Drucksensors und eines Volumenstromsensors verzichtet werden. Der Motor wird mit einem vorgegebenen Arbeitspunkt für eine Motorregelgröße betrieben. Die Motorregelgröße wird detektiert, um festzustellen, ob eine Abweichung von einem Sollwert vorliegt. Ist dies der Fall, wird das System mit einem anderen Arbeitspunkt betrieben. Die Arbeitspunkte werden dabei iterativ geändert, bis die Abweichung zwischen dem Sollwert und dem Istwert für die Motorregelgröße ausreichend klein ist.

US 8 346 507 B2 wertet in einem Ventilationssystem die zeitliche Änderung einer Leistung aus. Abhängig von der Steigung der Leistung kann eine Fallunterscheidung getroffen werden, ob in einem Strömungskanal eine Klappe geschlossen wird, ob eine Kühlspule im Kühlsystem eingefroren ist oder ob ein Filter verstopft ist. Anhand unterschiedlicher Steigungswerte der Leistung abhängig von der Zeit können die unterschiedlichen Zustände voneinander unterschieden und somit erkannt werden.

DE 10 2018 211 869 A1 beschreibt ein Verfahren zur Ermittlung einer Fluidförderkenngröße einer Fluidfördervorrichtung, insbesondere eines Volumenstroms. Bei der Fluidfördervorrichtung kann es sich um einen rückwärtsgekrümmten Radialventilator handeln. Die Kennlinie eines solchen rückwärtsgekrümmten Radialventilators hat ein Leistungsmaximum. Leistungswerte, die kleiner sind als das Leistungsmaximum, können nicht eindeutig einer Drehzahl des Ventilators zugeordnet werden. Um den aktuellen Arbeitspunkt ermitteln zu können, werden Schwingungscharakteristiken für die Arbeitspunkte des Radialventilators verwendet und basierend auf einer bekannten Korrelation zwischen einer Schwingungsinformation und dem Volumenstrom der aktuelle Arbeitspunkt ermittelt.

DE 43 29 346 A1 beschreibt einen Parallelbetrieb von mehreren Hubgebläsen. Es soll vermieden werden, ein Hubgebläse im Rahmen der Regelung zu überblasen, also eine entgegengesetzte Durchströmung des Hubgebläses (negativer Volumenstrom) zu vermeiden. Dazu ist ein Druck- oder Lageregelkreis vorhanden. Der Druck oder die Höhe des Luftkissens werden gemessen und zur Regelung der Drehzahl bzw. der Leistung der Hubgebläse verwendet. Zwar kann die Kennlinie des Hubgebläses ein Maximum aufweisen, allerdings wird das Hubgebläse ausgehend vom Maximum nur im Bereich eines Kennlinienasts mit höheren Volumenströmen betrieben.

WO 2019/166448 A1 offenbart ein Verfahren zur Arbeitspunktbestimmung eines Ventilators, wobei die Kennlinie des Ventilators einen mehrdeutigen Bereich aufweist. Um den Arbeitspunkt des Ventilators in einer Anlage exakt bestimmen zu können, wird mindestens ein Hochlauf des Ventilators durchgeführt, um dann anhand von Motorparametern während des Hochlaufs die dazugehörigen strömungstechnischen Parameter zu ermitteln und basierend darauf den Arbeitspunkt zu bestimmen.

Ausgehend vom bekannten Stand der Technik kann es als Aufgabe der vorliegenden Erfindung angesehen werden, ein einfaches und genaues Verfahren zur Ermittlung des Zustands eines Filters in einer Ventilatoreinheit zu schaffen und ein dazu eingerichtetes Ventilatorsystem bereitzustellen.

Diese Aufgabe wird durch ein Verfahren mit den Merkmalen des Patentanspruches 1 sowie ein Ventilatorsystem mit den Merkmalen des Patentanspruches 11 gelöst.

Die Erfindung stellt ein Verfahren und ein Ventilatorsystem zur Durchführung des Verfahrens bereit. Das Verfahren ist dazu eingerichtet, eine Strömungswiderstandsänderung eines Strömungspfads zu ermitteln, in dem eine Ventilatoreinheit angeordnet ist. Die Ventilatoreinheit weist einen Ventilator und wenigstens einen Filter auf. Der Ventilator ist insbesondere als rückwärtsgekrümmter Radialventilator ausgebildet. Der wenigstens eine Filter ist bei einem Ausführungsbeispiel stromaufwärts des Ventilators in einem Zuströmkanal angeordnet. Ein Gehäuse der Ventilatoreinheit kann den Zuströmkanal sowie einen stromabwärts des Ventilators angeordneten Abströmkanal begrenzen.

Die Ventilatoreinheit weist außerdem eine Ventilatorsteuerung auf, die dazu eingerichtet ist, einen Elektromotor des Ventilators zu steuern oder zu regeln. Die Ventilatorsteuerung kann optional mit wenigstens einem Sensor kommunikationsverbunden sein, um einen aktuellen Betriebszustand des Ventilators zu erfassen, beispielsweise die Istdrehzahl des Ventilators. Die Istdrehzahl des Ventilators kann die Drehzahl eines Ventilatorrades des Ventilators und/oder die Drehzahl eines Rotors eines Elektromotors des Ventilators sein. Vorzugsweise ist das Ventilatorrad drehfest mit dem Rotor des Elektromotors verbunden, so dass die Drehzahl des Rotors des Elektromotors mit der Drehzahl des Ventilatorrades übereinstimmt.

Mittels des Ventilators wird eine Luftströmung im Strömungsraum und durch den wenigstens einen Filter der Ventilatoreinheit erzeugt. Bei dem Ventilator der Ventilatoreinheit handelt es sich insbesondere um einen rückwärtsgekrümmten Radialventilator. Bei diesem Ventilatortyp weist das Ventilatorrad in Bezug auf die Drehrichtung nach hinten gekrümmte Ventilatorflügel auf. Jeder Ventilatorflügel hat eine Innenkante und eine Außenkante, wobei die Innenkante in Radialrichtung zur Drehachse näher an der Drehachse angeordnet ist als die Außenkante. In Bezug auf die Drehrichtung ist die Außenkante hinter der Innenkante des Ventilatorflügels angeordnet.

Die Ventilatoreinheit hat für jede Drehzahl des Ventilators eine Leistungskennlinie, die den Zusammenhang zwischen der elektrischen Leistung des Ventilators und einem Strömungsparameter der Ventilatoreinheit beschreibt, insbesondere der Druckdifferenz zwischen einem Eingangsdruck und einem Ausgangsdruck der Ventilatoreinheit. Der Eingangsdruck wird stromaufwärts der Ventilatoreinheit in dem Zuströmkanal und der Ausgangsdruck der Ventilatoreinheit wird stromabwärts im Abströmkanal ermittelt. Als Strömungsparameter kann auch ein Volumen- oder Massenstrom der Luftströmung durch die Ventilatoreinheit verwendet werden. Die Leistungskennlinie wird insbesondere durch Messung und/oder Simulation für die Ventilatoreinheit - aufweisend den Ventilator und den wenigstens einen Filter - ermittelt und abgespeichert, beispielsweise in einem Speicher der Ventilatorsteuerung oder in einer externen Recheneinheit, die mit der Ventilatorsteuerung kommunikationsverbunden ist. Für unterschiedliche Drehzahlen können jeweils eine Leistungskennlinie ermittelt und abgespeichert werden. Somit kann ein Kennfeld aus mehreren abgespeicherten Leistungskennlinien verfügbar sein.

Mittels des Ventilators wird eine Luftströmung entlang des Strömungspfades und dabei durch den wenigstens einen Filter erzeugt. Die Drehzahl, mit der der Ventilator betrieben wird, ist bekannt und kann gesteuert oder geregelt werden. Die Solldrehzahl kann durch die Ventilatorsteuerung und/oder die externe Recheneinheit vorgegeben werden. Die Istdrehzahl des Ventilators kann durch einen Drehzahlsensor erfasst und der Ventilatorsteuerung und/oder die externe Recheneinheit bereitgestellt werden. Alternativ kann anstelle der Istdrehzahl auch die Solldrehzahl verwendet werden, unter der Annahme, dass die Istdrehzahl zumindest im Wesentlichen mit der Solldrehzahl übereinstimmt.

Die elektrische Leistung des Ventilators ist die vom Elektromotor des Ventilators aufgenommene elektrische Leistung. Insbesondere werden hierfür der Motorstrom und die Motorspannung ermittelt und daraus die elektrische Leistung berechnet. Der Motorstrom und/oder die Motorspannung können gemessen werden. Die Motorspannung kann auf einen konstanten Wert eingestellt sein, so dass eine Messung entfallen kann.

Basierend auf der Istdrehzahl oder der Solldrehzahl kann eine abgespeicherte Leistungskennlinie ausgewählt werden. Dabei wird diejenige Leistungskennlinie ausgewählt, bei der der Unterschied zwischen der aktuellen Istdrehzahl oder Solldrehzahl am kleinsten ist gegenüber der Drehzahl, die der abgespeicherten Leistungskennlinie zugeordnet ist. Optional kann eine Leistungskennlinie auch basierend auf einer Referenzkennlinie unter Verwendung von Affinitätsgesetzten berechnet werden.

Die wenigstens eine Leistungskennlinie der Ventilatoreinheit hat einen mehrdeutigen Leistungswertebereich. In diesem mehrdeutigen Leistungswertebereich werden einem Leistungswert zwei mögliche Strömungsparameterwerte zugeordnet. Daher kann in diesem mehrdeutigen Leistungswertebereich anhand eines einzigen aktuellen Leistungswertes nicht eindeutig erkannt werden, an welchem Arbeitspunkt die Ventilatoreinheit arbeitet. Außerhalb des mehrdeutigen Leistungswertebereichs kann die Leistungskennlinie einen Bereich aufweisen, in der jedem aktuellen Leistungswert genau ein Strömungsparameterwert zugeordnet ist.

Zur Bestimmung des aktuellen Arbeitspunktes wird zumindest der aktuelle Leistungswert für die elektrische Leistung des Ventilators ermittelt und daraus kann zumindest in einem eindeutigen Leistungswertebereich der ausgewählten Leistungskennlinie der aktuelle Strömungsparameterwert (z.B. Differenzdruckwert) ermittelt werden.

Erfindungsgemäß kann zusätzlich zu dem aktuellen Leistungswert, der einen zweiten Leistungswert zu einem zweiten Zeitpunkt darstellt, wenigstens ein Leistungswert zu wenigstens einem zeitlich vorhergehenden Zeitpunkt ermittelt und berücksichtigt werden, der einen ersten Leistungswert zu einem ersten Zeitpunkt darstellt. Dies ist zumindest dann erforderlich, wenn der zweite Leistungswert im mehrdeutigen Leistungswertebereich liegt und der aktuelle Arbeitspunkt bestimmt werden soll. Der aktuelle Arbeitspunkt lässt sich dadurch auch im mehrdeutigen Leistungswertebereich eindeutig bestimmen. Beispielsweise kann angenommen werden, dass sich der Arbeitspunkt der Ventilatoreinheit durch eine Veränderung des wenigstens einen Filters mit zunehmender Betriebsdauer verändert und dass der wenigstens eine Filter während der Betriebsdauer immer stärker verschmutzt. Der Strömungsparameterwert kann durch diese zunehmende Verschmutzung nur zunehmen oder nur abnehmen, de nachdem, welche physikalische Größe als Strömungsparameter verwendet wird. Beispielsweise kann die Druckdifferenz zwischen dem Eingangsdruck und dem Ausgangsdruck der Ventilatoreinheit bei zunehmender Verschmutzung nur zunehmen und der Volumen- oder Massenstrom durch die Ventilatoreinheit kann nur abnehmen. Zwei mit zeitlichem Abstand ermittelte Leistungswerte sind daher ausreichend, um den aktuellen Arbeitspunkt eindeutig zu ermitteln.

Zusätzlich oder alternativ können in einer zeitlichen Folge auch drei oder mehr Leistungswerte ermittelt werden, so dass der aktuelle Arbeitspunkt basierend auf den zwei oder mehr vorhergehenden Leistungswerten bestimmt werden kann.

Der Arbeitspunkt und der sich ergebende Strömungsparameterwert (z.B. die sich ergebende Druckdifferenz zwischen dem Eingangsdruck und dem Ausgangsdruck) sind auch charakteristisch für einen Strömungswiderstand einer Luftströmung entlang des Strömungspfades und durch die Ventilatoreinheit. Anhand des aktuellen Arbeitspunktes kann daher beispielsweise auf den Zustand des Filters geschlossen werden und es können geeignete Maßnahmen eingeleitet werden. Beispielsweise kann eine Information erzeugt und ausgegeben werden, die angibt, ob der Filter gereinigt oder ausgetauscht werden muss. Es können hierbei qualitative und/oder quantitative Angaben über den Zustand des Filters gemacht werden. Beispielsweise kann der Filterzustand in mehrere Stufen eingeteilt und die Stufe des Filterzustandes ausgegeben werden. Eine Stufe des Filterzustandes kann dabei beispielsweise einem guten Filterzustand entsprechen, während eine andere Stufe das sofortige Auswechseln des Filters verlangt. Eine Stufe oder ein Zustand kann auch einen nicht vorhandenen bzw. installierten Filter beschreiben.

Mittels der Erfindung lässt sich eine sehr genaue Bestimmung des aktuellen Arbeitspunktes realisieren. Die Leistungskennlinie der Ventilatoreinheit unterscheidet sich von der Ventilatorkennlinie des Ventilators. Insbesondere bei einem rückwärtsgekrümmten Radialventilator ist der Verlauf der Ventilatorkennlinie im Bereich eines Maximums über einen großen Wertebereich des Strömungsparameters sehr flach, so dass in diesem Wertebereich des Strömungsparameters die elektrische Leistung nicht mit ausreichender Sicherheit bzw. Genauigkeit einem Strömungsparameterwert zugeordnet werden kann. Demgegenüber ist die Leistungskennlinie der Ventilatoreinheit im Bereich des Maximums weniger breit und die Zuordnung zwischen einer elektrischen Leistung und einem Strömungsparameterwert ist auch im Bereich des Maximums mit ausreichender Genauigkeit möglich.

Das Bestimmen einer mechanischen Leistung des Ventilators entfällt. Der Leistungswert für die elektrische Leistung des Ventilators (aufgenommene elektrische Leistung des Elektromotors) kann sehr genau und sehr einfach bestimmt werden, beispielsweise indem der Motorstrom und/oder die Motorspannung gemessen oder anderweitig bestimmt werden. Aus dem Leistungswert kann basierend auf der ausgewählten Leistungskennlinie direkt ein Strömungsparameterwert der Ventilatoreinheit (Differenzdruckwert, Volumenstromwert, etc.) und somit der aktuelle Arbeitspunkt bestimmt werden. Wenn ein Kennfeld bestehend aus einer Mehrzahl von Leistungskennlinien für unterschiedliche Drehzahlen des Ventilators abgespeichert ist, kann auf das Umrechnen einer Referenzkennlinie auf eine Leistungskennlinie bei der aktuellen Drehzahl unter Verwendung der Affinitätsgesetze verzichtet werden, was zum einen den Rechenaufwand reduziert und zum anderen die Genauigkeit bei der Ermittlung des aktuellen Arbeitspunktes vergrößert.

Es ist vorteilhaft, wenn die Drehzahl des Ventilators geregelt wird, so dass die Drehzahl mit hoher Genauigkeit bekannt ist und die zugehörige Leistungskennlinie ausgewählt oder alternativ berechnet werden kann.

Die Erfindung kann beispielsweise dazu verwendet werden, den Zustand des wenigstens einen Filters zu ermitteln, beispielsweise indem der aktuelle Arbeitspunkt mit einem früheren Arbeitspunkt verglichen wird und daraus auf eine zunehmende Verschmutzung des Filters geschlossen wird. Dies ist insbesondere dann möglich, wenn die Verschmutzung des Filters der wesentliche Faktor für einen zunehmenden Strömungswiderstand der Luftströmung durch die Ventilatoreinheit darstellt. Davon kann in vielen Fällen ausgegangen werden.

Es ist vorteilhaft, wenn das Bestimmen des aktuellen Arbeitspunktes der Ventilatoreinheit immer abhängig von dem ersten Leistungswert, dem zweiten Leistungswert und der ausgewählten oder ermittelten Leistungskennlinie durchgeführt wird, unabhängig davon, ob der zweite Leistungswert innerhalb oder außerhalb des mehrdeutigen Leistungswertebereichs ist. Bei dieser Ausführungsform des Verfahrens ist eine Fallunterscheidung nicht erforderlich.

Alternativ dazu kann eine Fallunterscheidung getroffen werden. Wenn der zweite Leistungswert außerhalb des mehrdeutigen Leistungswertebereichs ist, kann das Bestimmen des aktuellen Arbeitspunktes des Ventilators unabhängig vom ersten Leistungswert durchgeführt werden. Der Arbeitspunkt ergibt sich dann bereits aus dem aktuellen zweiten Leistungswert und der Leistungskennlinie.

Die Leistungskennlinie der Ventilatoreinheit hat im mehrdeutigen Leistungswertebereich ein Maximum und somit einen Abschnitt mit positiver Steigung und einen Abschnitt mit negativer Steigung. Wenn als Strömungsparameter die Druckdifferenz verwendet wird, nimmt die Leistung der Ventilatoreinheit mit zunehmender Druckdifferenz im Abschnitt mit positiver Steigung zu und im Abschnitt mit negativer Steigung nimmt die Leistung der Ventilatoreinheit mit zunehmender Druckdifferenz ab.

Der Strömungsparameterwert der Ventilatoreinheit kann alternativ oder zusätzlich von weiteren den Strömungswiderstand der Luftströmung beeinflussenden Parametern abhängen, beispielsweise vom Öffnen und/oder Schließen von Klappen im Strömungspfad bzw. Strömungspfad der Gasströmung. Solche Änderungen des Strömungsparameters verlaufen zeitlich wesentlich schneller und lassen sich daher von langsameren Strömungsparameteränderungen durch eine zunehmende Filterverstopfung unterscheiden, beispielsweise durch Berücksichtigung des zeitlichen Gradienten des Strömungsparameters.

Es ist außerdem vorteilhaft, wenn bei der Bestimmung des aktuellen Arbeitspunktes die Drehzahl des Ventilators berücksichtigt wird. Insbesondere kann die bei der Bestimmung des Arbeitspunktes zu verwendende Leistungskennlinie von der Drehzahl abhängen und entweder abhängig von der Drehzahl berechnet oder aus einem Kennfeld ausgewählt werden.

Beispielsweise kann eine zu verwendende Leistungskennlinie abhängig von der Drehzahl und einer bekannten, vorgegebenen Referenzkennlinie berechnet werden. Die Referenzkennlinie kann beispielsweise empirisch im Rahmen der Entwicklung oder der Inbetriebnahme des Ventilators bei einer Referenzkennzahl aufgenommen werden. Die aktuelle Leistungskennlinie kann dann basierend auf den folgenden Gleichungen (Affinitätsgesetze) ermittelt werden:

$$\frac{P1}{P2} = \left(\frac{n1}{n2}\right)^3 \qquad (1)$$

$$\frac{dp1}{dp2} = \left(\frac{n1}{n2}\right)^2 \qquad (2)$$

Es ist vorteilhaft, wenn der Ventilator der Ventilatoreinheit drehzahlgesteuert oder drehzahlgeregelt ist. Insbesondere kann eine konstante Solldrehzahl als Regelgröße vorgegeben werden. Die Drehzahl des Ventilators ist somit im Betrieb stationär oder zumindest quasistationär.

Es ist außerdem vorteilhaft, wenn die Ventilatoreinheit mit einer externen Recheneinheit kommunikationsverbunden ist. Die Ermittlung des aktuellen Arbeitspunktes und/oder die Bestimmung des Zustandes des Filters und/oder das Vorgeben eines anderen, neuen Arbeitspunktes kann über die externe Recheneinheit erfolgen. Die externe Recheneinheit kann an einem von der Ventilatoreinheit entfernten Ort angeordnet sein und beispielsweise über eine Internetverbindung mit der Ventilatoreinheit kommunizieren. Die externe Recheneinheit kann eine Cloud-Recheneinheit sein. Die externe Recheneinheit kann mit mehreren Ventilatoreinheiten kommunikationsverbunden sein.

Ein erfindungsgemäßes Ventilatorsystem kann wenigstens eine Ventilatoreinheit und eine externe Recheneinheit aufweisen. Sind mehrere Ventilatoreinheiten vorhanden, können diese über ein Kommunikationsnetzwerk mit einem gemeinsamen Modem oder einer anderen Kommunikationsschnittstelle kommunikationsverbunden sein. Das Kommunikationsnetzwerk kann ein Bussystem sein. Das Bussystem kann irgendeine bekannte Architektur aufweisen oder irgendeinem bekannten Standard entsprechen, beispielsweise einem Feldbusstandard, wie etwa PROFIBUS oder MODBUS.

Das Modem oder die Kommunikationsschnittstelle kann zur Kommunikation mit der externen Recheneinheit eingerichtet sein, wobei die Kommunikationsverbindung zwischen dem Modem und der externen Recheneinheit beispielsweise über eine LAN-Verbindung, WLAN-Verbindung, Ethernet-Verbindung, eine GSM-Verbindung, eine beliebige Kombination davon oder irgendeine andere Internetverbindung realisiert sein.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:

Figur 1 eine schematische, blockschaltbildähnliche Darstellung eines Ausführungsbeispiels eines Ventilatorsystems,

Figur 2 eine schematische, blockschaltbildähnliche Darstellung eines Ausführungsbeispiels einer Ventilatoreinheit des Ventilatorsystems aus Figur 1,

Figur 3 eine schematische Darstellung eines Kennfeldes mit mehreren Leistungskennlinien einer Ventilatoreinheit nach Figur 2 und einer Ventilatorkennlinie zum Vergleich,

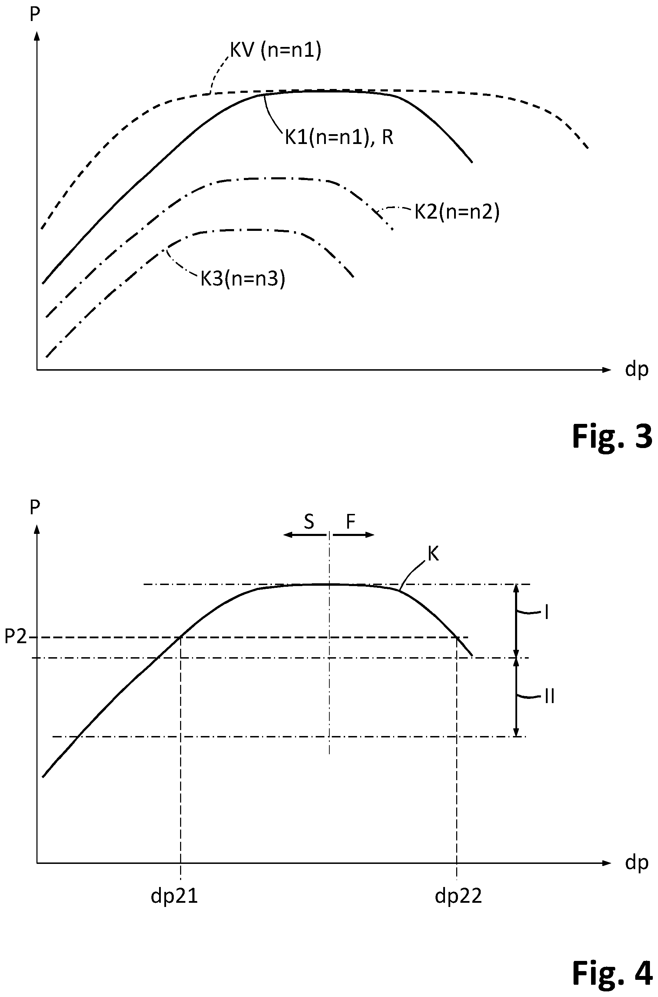

Figuren 3 und 4 jeweils eine schematische Darstellung einer Leistungskennlinie zur Veranschaulichung des Verfahrens zur Bestimmung eines aktuellen Arbeitspunktes anhand der Leistungskennlinie.

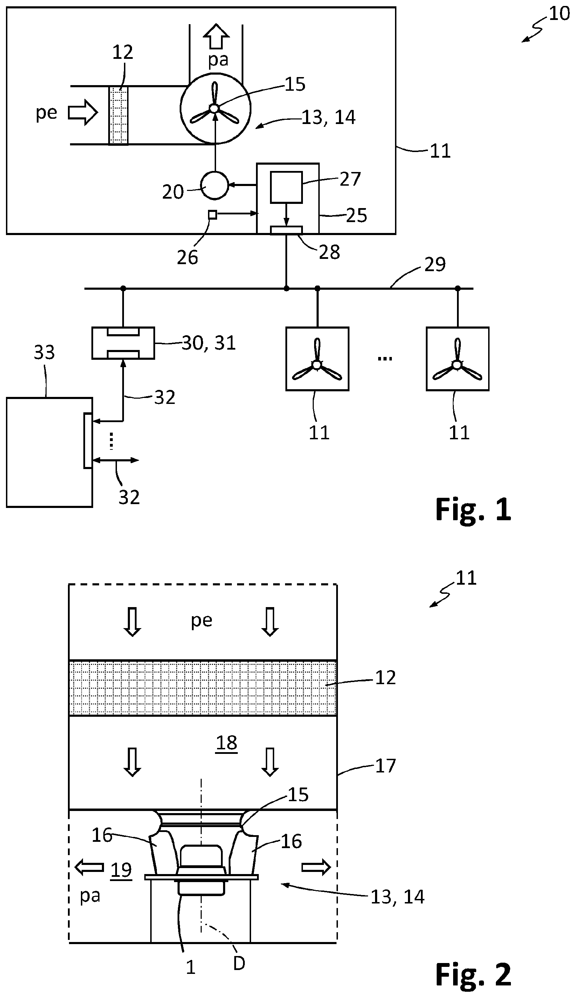

In Figur 1 ist ein Blockschaltbild eines Ausführungsbeispiels eines Ventilatorsystems 10 veranschaulicht. Das Ventilatorsystem 10 weist wenigstens eine Ventilatoreinheit 11 auf. Die Ventilatoreinheit 11 weist wenigstens einen Filter 12 und einen Ventilator 13 auf. Der Ventilator 13 ist dazu eingerichtet, eine Luftströmung durch den wenigstens einen Filter 12 zu erzeugen. Der wenigstens eine Filter 12 kann stromaufwärts oder stromabwärts des Ventilators 13 angeordnet sein.

Bei dem Ventilator 13 handelt es sich beispielsgemäß um einen rückwärtsgekrümmten Radialventilator 14. Der Radialventilator 14 hat ein Ventilatorrad 15, das um eine Drehachse D drehbar gelagert ist. An dem Ventilatorrad 15 sind in Umfangsrichtung um die Drehachse D verteilt mehrere Ventilatorflügel 16 angeordnet. Jeder Ventilatorflügel 16 ist mit Abstand zur Drehachse D angeordnet und hat eine radial innenliegende Innenkante sowie eine radial außenliegende Außenkante. In Drehrichtung um die Drehachse D ist die Außenkante hinter der Innenkante des Ventilatorflügels 16 angeordnet. Jeder Ventilatorflügel 16 krümmt sich daher von der Innenkante zur Außenkante in Drehrichtung nach hinten. Ein Ausführungsbeispiel des rückwärtsgekrümmten Radialventilators 14 ist stark schematisiert in Figur 2 veranschaulicht.

In Figur 2 ist ein Ausführungsbeispiel für die Ventilatoreinheit 11 dargestellt. Die Ventilatoreinheit 11 weist beim Ausführungsbeispiel ein Gehäuse 17 auf, das einen Zuströmkanal 18 sowie einen Abströmkanal 19 begrenzt. Der Zuströmkanal 18 ist stromaufwärts des Ventilators 13 und beispielsgemäß des Radialventilators 14 vorhanden und im Wesentlichen parallel zur Drehachse D des Ventilators 13 ausgerichtet. Der Abströmkanal 19 ist bei dem hier dargestellten Radialventilator 14 radial zur Drehachse D ausgerichtet. Beispielsgemäß ist ein einziger Filter 12 im Zuströmkanal 18 angeordnet. In Abwandlung zum veranschaulichten Ausführungsbeispiel könnten auch mehrere Filter 12 im Zuströmkanal 18 und/oder im Abströmkanal 19 angeordnet sein.

Am Eingang der Ventilatoreinheit 11 herrscht ein Eingangsdruck pe und am Ausgang der Ventilatoreinheit 11 herrscht ein Ausgangsdruck pa. Zwischen den Stellen, an denen der Eingangsdruck pe und der Ausgangsdruck pa herrschen, sind der wenigstens eine Filter 12 und der Ventilator 13 der Ventilatoreinheit 11 im Strömungspfad angeordnet.

Zum drehenden Antreiben des Ventilatorrades 15 um die Drehachse D weist der Ventilator 13 einen Elektromotor 20 auf. Der Elektromotor 20 ist vorzugsweise ein bürstenloser Gleichstrommotor, der auch als permanentmagneterregter elektronisch kommutierter Gleichstrommotor bezeichnet werden kann. Der bürstenlose Gleichstrommotor weist einen lediglich geringen Verschleiß auf und kann sehr gut drehzahlgeregelt werden. Außerdem kann mit dem bürstenlosen Gleichstrommotor eine hohe Energieeffizienz erreicht werden.

Das Ventilatorsystem 10 weist zur Steuerung oder Regelung des Ventilators 13 und mithin des Elektromotors 20 eine Ventilatorsteuerung 25 auf. Die Ventilatorsteuerung ist insbesondere dazu eingerichtet, die Drehzahl des Rotors des Elektromotors 20 zu steuern oder zu regeln. Beim Ausführungsbeispiel ist das Ventilatorrad 15 drehfest mit dem Rotor des Elektromotors 20 verbunden, so dass die Drehzahl des Rotors des Elektromotors 20 mit der Drehzahl des Ventilatorrades 15 übereinstimmt, was zusammenfassend auch als Drehzahl des Ventilators 13 bezeichnet werden kann.

Bei dem hier veranschaulichten Ausführungsbeispiel wird die Drehzahl des Ventilators 13 vorzugsweise geregelt. Mittels eines Drehzahlsensors 26 wird die Drehzahl des Rotors des Elektromotors 20 und/oder des Ventilatorrades 15 detektiert und wird der Ventilatorsteuerung 25 bereitgestellt. Dazu ist der Drehzahlsensor 26 mit der Ventilatorsteuerung 25 kommunikationsverbunden. Zusätzlich zum Drehzahlsensor 26 kann auch wenigstens ein weiterer Sensor vorhanden sein, um wenigstens einen weiteren Betriebsparameter des Elektromotors 20 zu erfassen. Beispielsweise kann ein Stromsensor zur Messung des Motorstromes und/oder ein Spannungssensor zur Messung der Motorspannung vorhanden sein.

Wenn der Ventilator 13 durch die Ventilatorsteuerung 25 drehzahlgeregelt ist, kann der Drehzahlsensor 26 optional auch entfallen und es kann angenommen werden, dass die Istdrehzahl des Ventilators 13 mit der vorgegebenen Solldrehzahl ausreichend genau übereinstimmt. Anstelle der detektierten Istdrehzahl kann dann die Solldrehzahl bei der Bestimmung des aktuellen Arbeitspunktes A der Ventilatoreinheit 11 verwendet werden. Das Verfahren zur Bestimmung des aktuellen Arbeitspunktes A der Ventilatoreinheit 11 wird nachfolgend noch genauer erläutert.

Die Ventilatorsteuerung 25 hat außerdem einen Speicher 27. In dem Speicher 27 können Informationen abgelegt werden, die zur Übermittlung oder für den Zugriff bereitgestellt werden. In dem Speicher 27 können solche Informationen bzw. Daten aktuelle Betriebsparameter umfassen, wie z.B. die Istdrehzahl, oder es können unveränderliche Daten abgelegt werden, wie beispielsweise eine oder mehrere Leistungskennlinien der Ventilatoreinheit 11.

Die Ventilatorsteuerung 25 weist eine Schnittstelle 28 auf, mit der die Ventilatoreinheit 11 an ein Kommunikationsnetzwerk 29 angeschlossen werden kann. Bei dem Kommunikationsnetzwerk 29 handelt es sich vorzugsweise um ein Bussystem, beispielsweise um ein Feldbussystem, das beispielsweise einem bekannten Standard entsprechen kann, wie etwa MODBUS oder PROFIBUS. Das Kommunikationsnetzwerk 20 kann drahtgebunden und/oder drahtlos sein.

An das Kommunikationsnetzwerk 29 können mehrere individuelle Ventilatoreinheiten 11 angeschlossen sein. Jede Ventilatoreinheit 11 ist über das Kommunikationsnetzwerk 29 mit einem Kommunikationsmodul 30, beispielsweise einem Modem 31, kommunikationsverbunden. Das Kommunikationsmodul 30 bildet eine Schnittstelle zwischen dem Kommunikationsnetzwerk 29 einerseits und einer Netzwerkverbindung 32 mit einer externen Recheneinheit 33 andererseits. Die Netzwerkverbindung kann zum Beispiel als LAN-Verbindung, WLAN-Verbindung, GSM-Verbindung oder auf irgendeiner anderen bekannten Art und Weise hergestellt werden. Die externe Recheneinheit 33 kann Bestandteil eines Cloud-Systems sein und somit eine Cloud-Recheneinheit bilden.

Das Ventilatorsystem 10 ist dazu eingerichtet, basierend auf einem erfindungsgemäßen Verfahren einen aktuellen Arbeitspunkt A einer, mehrerer oder aller Ventilatoreinheiten 11 zu ermitteln. Das Ermitteln des aktuellen Arbeitspunktes A einer Ventilatoreinheit 11 bzw. das Bestimmen des Zustandes des Filters 12 dieser Ventilatoreinheit 11 erfolgt beispielsgemäß durch die externe Recheneinheit 33. Die dafür erforderliche Rechenleistung kann durch die externe Recheneinheit 33 bereitgestellt werden. Die zur Bestimmung des aktuellen Arbeitspunktes A notwendigen Daten und Informationen können dezentral im Speicher 27 und/oder zentral in der externen Recheneinheit 33 vorhanden oder gespeichert sein. Die externe Recheneinheit 33 kann daher das Ventilatorsystem 10 zentral verwalten und/oder steuern. Beispielsweise können mittels der externen Recheneinheit 33 Vorgaben zur Steuerung oder Regelung jeder Ventilatoreinheit 11 eines Ventilatorsystems 10 an die jeweilige Ventilatorsteuerung 25 übermittelt werden, wie etwa ein einzustellender Sollwert, beispielsweise die Solldrehzahl des Ventilators 13 der Ventilatoreinheit 11.

Die externe Recheneinheit 33 kann über die Netzwerkverbindung 32 auch mit mehreren Kommunikationsmodulen 30 kommunikationsverbunden sein, die wiederum über jeweils ein Kommunikationsnetzwerk 29 mit wenigstens einer Ventilatoreinheit 11 kommunikationsverbunden sind. Anders ausgedrückt kann die externe Recheneinheit 33 auch Bestandteil mehrerer separater Ventilatorsysteme 10 sein.

Während des Betriebs der Ventilatoreinheit 11 werden Partikel, die in der Luft enthalten sind, durch den wenigstens einen Filter 12 aus der Luftströmung herausgefiltert. Die Beladung des Filters 12 mit Partikeln nimmt daher mit zunehmender Betriebsdauer der Ventilatoreinheit 11 zu und seine Fähigkeit, einen vorgegebenen Luft-Volumenstrom oder Luft-Massenstrom durch die Ventilatoreinheit 11 zu ermöglichen, nimmt ab. Es kann basierend auf der Bestimmung des aktuellen Arbeitspunktes A der Ventilatoreinheit 11 beispielsweise auch der Zustand des Filters 12 ermittelt werden, so dass eine Information darüber vorliegt, ob bzw. wann der Filter 12 gereinigt oder ausgetauscht werden muss.

In Figur 3 ist schematisch ein Ausführungsbeispiel eines Kennfeldes mit mehreren Leistungskennlinien K1, K2, K3 der Ventilatoreinheit 11 gemäß Figuren 1 und 2 veranschaulicht. Beispielhaft sind drei Leistungskennlinien K1, K2, K3 gezeigt, wobei jede der Leistungskennlinien K1, K2, K3 einer Drehzahl $n_1$, $n_2$, $n_3$ des Ventilators 13 zugeordnet ist. Das heißt, jede Leistungskennlinie K1, K2, K3 ist bei der zugeordneten Drehzahl des Ventilators 13 gültig und beschreibt bei dieser Drehzahl $n_1$, $n_2$, $n_3$ den Zusammenhang zwischen einer elektrischen Leistung P des Ventilators 13 mit einem Strömungsparameter der gesamten Ventilatoreinheit 11.

Als Strömungsparameter kann beispielsweise eine Druckdifferenz dp oder alternativ auch ein anderer den Strömungswiderstand entlang des Strömungspfades charakterisierender Strömungsparameter verwendet werden, wie z.B. ein Volumenstrom oder Massenstrom durch die Ventilatoreinheit. Beispielsgemäß beschreibt jede Leistungskennlinie K1, K2, K3 den Zusammenhang zwischen einer elektrischen Leistung P des Ventilators 13 und einer Druckdifferenz dp bei einer vorgegebenen Drehzahl $n_1$, $n_2$, $n_3$ des Ventilators 13. Die Druckdifferenz dp entspricht der Differenz zwischen dem Eingangsdruck pe und dem Ausgangsdruck pa der Ventilatoreinheit 11. Die Druckdifferenz dp hängt somit zum einen vom Betriebszustand des Ventilators 13 und zum anderen vom Zustand des Filters 12 und insbesondere dessen Beladung mit aus der Luft gefilterten Partikeln ab.

Je größer die Beladung bzw. Verschmutzung des Filters 12 ist, desto größer wird die Druckdifferenz dp.

Für das Verfahren kann in der externen Recheneinheit 33 oder im Speicher 27 ein Kennfeld aus mehreren Leistungskennlinien K1, K2, K3 für die unterschiedlichen Drehzahlen n1, n2, n3 des Ventilatorrades 16 bzw. des Ventilators 13 abgelegt sein. Es ist auch möglich, für jeden Typ eines Ventilators 13 eine Referenzkennlinie R bei einer vorgegebenen Referenzdrehzahl zu ermitteln und abzuspeichern. Die Referenzkennlinie R und/oder das Kennfeld aus mehreren Leistungskennlinien K1, K2, K3 kann beispielsweise empirisch und/oder durch Simulation ermittelt werden, insbesondere im Labor bzw. beim Hersteller oder im Rahmen der Inbetriebnahme der Ventilatoreinheit 11 am Installationsort.

Wird der Ventilator 13 bei einer anderen Drehzahl betrieben als der Referenzdrehzahl, die der Referenzkennlinie R zugeordnet ist, oder bei einer Drehzahl, die keiner der abgespeicherten Kennlinien K1, K2, K3 des Kennfeldes zugeordnet ist, kann eine aktuell benötigte Leistungskennlinie K für die aktuelle Drehzahl basierend auf den folgenden Gleichungen (Affinitätsgesetze) ermittelt werden:

$$\frac{P1}{P2} = \left(\frac{n1}{n2}\right)^3 \qquad (1)$$

$$\frac{dp1}{dp2} = \left(\frac{n1}{n2}\right)^2 \qquad (2)$$

Somit steht für jede Istdrehzahl des Ventilators 13 entweder eine ausreichend genaue Leistungskennlinie K1, K2, K3 aus einem abgespeicherten Kennfeld zur Auswahl bereit oder es kann die aktuelle Leistungskennlinie basierend auf den Gleichungen (1) und (2) berechnet werden.

Wie es in Figur 4 veranschaulicht ist, weist jede Leistungskennlinie K einen mehrdeutigen Leistungswertebereich I und beispielsgemäß einen eindeutigen Leistungswertebereich II auf. In dem mehrdeutigen Leistungswertebereich I werden jedem Leistungswert der elektrischen Leistung P des Ventilators 13 bzw. Elektromotors 20 zwei Druckdifferenzwerte zugeordnet. Wenn also ein aktueller Leistungswert für die aufgenommene elektrische Leistung P des Ventilators 13 ermittelt wird, kann anhand dieses Leistungswertes der Arbeitspunkt A der Ventilatoreinheit 11 nicht bestimmt werden, wenn der aktuell ermittelte Leistungswert im mehrdeutigen Leistungswertebereich I liegt. Liegt der aktuell ermittelte Leistungswert hingegen im eindeutigen Leistungswertebereich II, ergibt sich der Arbeitspunkt A der Ventilatoreinheit 11 bereits aus dem aktuell ermittelten Leistungswert und der Leistungskennlinie K der Ventilatoreinheit 11.

Um den Arbeitspunkt A auch für Leistungswerte eindeutig bestimmen zu können, die im mehrdeutigen Leistungswertebereich I liegen, wird wie folgt vorgegangen:

Zu einem ersten Zeitpunkt wird ein erster Leistungswert P1 der aufgenommenen elektrischen Leistung des Ventilators 13 ermittelt. Dazu können beispielsweise der Motorstrom und/oder die Motorspannung des Elektromotors 15 und/oder damit in Zusammenhang stehende Parameter gemessen bzw. berechnet werden. Zu einem zweiten Zeitpunkt, der in einem ausreichenden zeitlichen Abstand zum ersten Zeitpunkt liegt, wird ein zweiter Leistungswert P2 der Leistung P ermittelt. Der zweite Leistungswert P2 kann der aktuelle Leistungswert sein, zu dem der Arbeitspunkt A der Ventilatoreinheit 11 ermittelt werden soll. Der erste Leistungswert P1 entspricht der Leistung des Ventilators 13 zu einem früheren Zeitpunkt, beispielsweise zum Zeitpunkt der unmittelbar vorhergehenden Ermittlung. Es ist bevorzugt, wenn der Leistungswert zeitabhängig oder ereignisabhängig ermittelt wird, beispielsweise in einem vorgegebenen Zeitintervall. Der zuletzt ermittelte Leistungswert kann der zweite Leistungswert P2 sein und der vorzugsweise bei der unmittelbar vorausgehenden Ermittlung bestimmte Leistungswert kann der erste Leistungswert P1 sein. Abweichend von dem hier beschriebenen Ausführungsbeispiel können auch mehr als zwei Leistungswerte in zeitlicher Folge ermittelt werden, wobei der zuletzt ermittelte Leistungswert den aktuellen Leistungswert definiert, der den aktuellen Arbeitspunkt der Ventilatoreinheit 11 kennzeichnet.

Wie es anhand der Figuren 3 bis 5 zu erkennen ist, weist die Leistungskennlinie K ein Maximum auf, das einen Abschnitt mit positiver Steigung S und einen Abschnitt mit negativer Steigung F voneinander trennt (Figur 4). Im Abschnitt mit positiver Steigung S nimmt die Leistung P mit zunehmender Druckdifferenz dp zu. Im Abschnitt mit negativer Steigung F nimmt die Leistung P mit zunehmender Druckdifferenz dp ab.

Es sei angenommen, dass zum zweiten Zeitpunkt ein zweiter Leistungswert P2 im mehrdeutigen Leistungswertebereich ermittelt wird. Wie es in Figur 3 veranschaulicht ist, ordnet die Leistungskennlinie K bei der aktuellen Drehzahl des Ventilators 13 diesem zweiten Leistungswert P2 einen unteren Druckdifferenzwert dp21 und einen oberen Druckdifferenzwert dp22 zu. Allein basierend auf der Ermittlung des aktuellen Leistungswertes, im vorliegenden Fall des zweiten Leistungswertes P2, kann daher kein Arbeitspunkt A der Ventilatoreinheit 11 ermittelt werden.

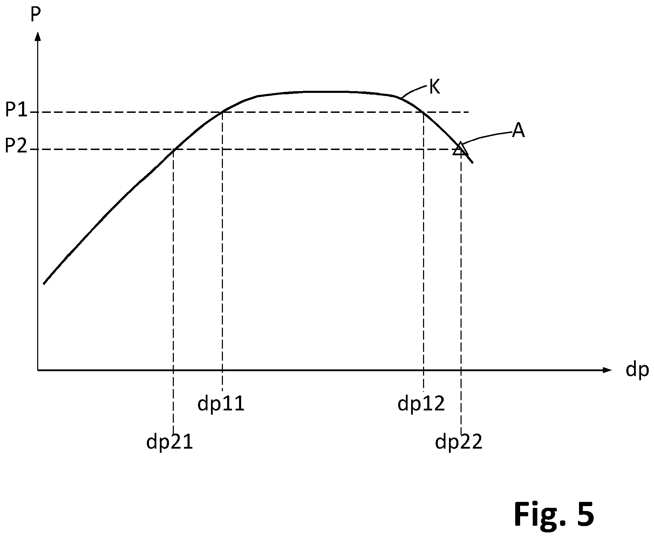

Deswegen wird ein zuvor zu einem ersten Zeitpunkt ermittelter erster Leistungswert P1 zusätzlich berücksichtigt. Diesem ersten Leistungswert P1 ordnet die Leistungskennlinie K einen unteren Druckdifferenzwert dp11 und einen oberen Druckdifferenzwert dp12 zu, wie es schematisch in Figur 5 veranschaulicht ist.

Bei der in Figur 2 schematisch veranschaulichten Ausführungsform der Ventilatoreinheit 11 kann angenommen werden, dass der Strömungswiderstand im Strömungspfad, also im Zuströmkanal und Abströmkanal der Ventilatoreinheit 11 ausschließlich bzw. im Wesentlichen durch die Ansammlung von Partikeln im Filter 12 beeinflusst wird, was wiederum den Strömungsparameter und beispielsgemäß die Druckdifferenz dp während des Betriebs der Ventilatoreinheit 11 kennzeichnet. Daher kann angenommen werden, dass die Druckdifferenz dp durch die zunehmende Verschmutzung des Filters 12 mit der Zeit zunimmt und nicht abnimmt. Mit diesem Wissen reicht es aus, zwei Leistungswerte P1, P2 zu verwenden, um den aktuellen Arbeitspunkt A basierend auf der ausgewählten Leistungskennlinie K zu bestimmen. Es können auch mehr als zwei Leistungswerte in zeitlicher Abfolge bestimmt werden, um daraus den aktuellen Arbeitspunkt A zu erkennen.

Im vorliegenden Fall kann also davon ausgegangen werden, dass die Druckdifferenz des aktuellen Arbeitspunktes A, die dem zweiten Leistungswert P2 der elektrischen Leistung zugeordnet ist, größer ist als die Druckdifferenz dp, die dem ersten Leistungswert P1 zugeordnet ist. Bei dem in den Figuren 4 und 5 veranschaulichten Beispiel befindet sich der aktuelle Arbeitspunkt A daher in dem Abschnitt F mit negativer Steigung. Daher kann basierend auf der Leistungskennlinie K dem ersten Leistungswert P1 und dem zweiten Leistungswert P2 festgestellt werden, dass der aktuelle Arbeitspunkt A dem Wertepaar des zweiten Leistungswertes P2 und dem oberen Druckdifferenzwert dp22 für den zweiten Leistungswert P2 entspricht. Der Arbeitspunkt A ist in Figur 5 durch das Dreieck veranschaulicht.

Sollte zu einem zweiten Zeitpunkt der aktuelle zweite Leistungswert P2 im eindeutigen Leistungswertebereich II liegen, genügt zur Ermittlung des aktuellen Arbeitspunktes A der zweite Leistungswert P2 und die Leistungskennlinie K.

Aufgrund der Ermittlung des aktuellen Arbeitspunktes A kann somit die aktuelle Druckdifferenz ermittelt werden, die bei dem in Figur 5 veranschaulichten Beispiel dem oberen Druckdifferenzwert dp22 für den zweiten Leistungswert P2 entspricht. Die Druckdifferenz dp ist abhängig von der Beladung des Filters 12 mit Partikeln, so dass daraus auf den Zustand des Filters 12 geschlossen werden kann.

Basierend darauf ist es möglich, den Zustand des Filters 12 quantitativ und/oder qualitativ zu bestimmen und eine entsprechende Information zu erzeugen, die für eine Bedienperson ausgegeben werden kann. Beispielsweise können Zustandsstufen gebildet werden, wobei die Anzahl der Zustandsstufen variieren kann. Der Filterzustand kann als "gut", "kritisch aber akzeptabel" und als "verstopft", z.B. in drei Stufen charakterisiert werden. Daraus kann eine Handlungsempfehlung abgeleitet werden, beispielsweise das Reinigen oder Austauschen des Filters.

Wenn in der Ventilatoreinheit oder in dem Strömungspfad der Luftströmung weitere Einrichtungen vorhanden sind, die den Strömungswiderstand beeinflussen, kann auch deren aktuelle Stellung mittels des vorstehend beschriebenen Verfahrens ermittelt werden.

Wird beispielsweise eine Klappe oder eine Drossel im Strömungspfad geöffnet oder geschlossen, ändert sich der Druckdifferenz dp sehr schnell. Wenn die Erfassung der Leistungswerte für die elektrische Leistung P ausreichend häufig erfolgt, können solche Änderungen ermittelt werden. Aufgrund der zeitlichen Änderung des Differenzdrucks, also basierend auf den Differenzdruckgradienten, kann das Erweitern oder Verringern des Strömungsquerschnitts des Strömungspfads der Luftströmung durch das Betätigen von dort vorhandenen Bauelementen von einer vergleichsweise langsameren kontinuierlichen Druckdifferenzzunahme durch eine zunehmende Verstopfung des Filters unterschieden werden. Strömungsquerschnittsänderungen aufgrund einer Betätigung einer Klappe, einer Drossel oder dergleichen können somit ebenfalls festgestellt und bei Bedarf angezeigt werden.

Es ist außerdem möglich, basierend auf der wenigstens einen abgespeicherten Leistungskennlinie zu erkennen, wenn die Ventilatoreinheit 11 versehentlich keinen Filtereinsatz in der Halterung des Filters 12 enthält oder der Filter 12 vollständig weggelassen wurde. Dann liegen die aktuellen Werte für die elektrische Leistung und den Strömungsparameter außerhalb der wenigstens einen abgespeicherten Leistungskennlinie.

Bei der Erfindung wird im Speicher 27 oder in der externen Recheneinheit 33 wenigstens eine Leistungskennlinie oder ein Kennfeld aus mehreren Leistungskennlinien K1, K2, K3 der Ventilatoreinheit 11 bestehend aus dem Ventilator 13 und dem wenigstens einen Filter 12 gespeichert. Die wenigstens eine Leistungskennlinie K1, K2, K3 kann beispielsweise herstellerseitig in einem Testlabor oder bei der Installation vor Ort durch Messungen und/oder durch eine Simulation ermittelt und der Ventilatoreinheit 11 zugeordnet werden. Identisch aufgebaute Ventilatoreinheiten 11 haben dieselben Leistungskennlinien.

Das Erfassen und Verwenden der Leistungskennlinie K (K1, K2, K3, ...) der Ventilatoreinheit 11 bei der Bestimmung des aktuellen Arbeitspunktes A hat verglichen mit dem Verwenden der Ventilatorkennlinie KV des Ventilators 13 den Vorteil, dass die Zuordnung eines ermittelten Leistungswerts der elektrischen Leistung P zu einem Strömungsparameterwert im Bereich des Maximums der Kennlinie eine ausreichend genau bzw. sicher ist, insbesondere auch für einen rückwärtsgekrümmten Radialventilator 14. Zum Vergleich ist in Figur 3 die Ventilatorkennlinie KV eines rückwärtsgekrümmten Radialventilators 14 bei einer ersten Drehzahl n1 gestrichelt dargestellt. Es ist zu erkennen, dass die Ventilatorkennlinie KV verglichen mit der ersten Leistungskennlinie K1 im Bereich des Maximums einen flachen Bereich aufweist, der sich über einen größeren Differenzdruckbereich erstreckt im Vergleich zur Leistungskennlinie K1 der Ventilatoreinheit 11. Die ausreichende Sicherheit der Zuordnung von einem Leistungswert zu einem Differenzdruck ist bei der Verwendung der Ventilatorkennlinie KV nicht immer gegeben. Gerade beim Einsatz von rückwärtsgekrümmten Radialventilatoren 14 stellt die Verwendung einer Leistungskennlinie K für die gesamte Ventilatoreinheit 11 einen erheblichen Vorteil dar.

Die Erfindung betrifft ein Verfahren und ein Ventilatorsystem, das zur Durchführung des Verfahrens eingerichtet ist. Das Verfahren dient zur Ermittlung eines aktuellen Arbeitspunktes einer Ventilatoreinheit 11 aufweisend einen Ventilator 13 und wenigstens einen Filter 12. Durch die Bestimmung des aktuellen Arbeitspunktes A kann beispielsweise auch auf den Grad der Verschmutzung des Filters 12 geschlossen werden. Es kann auch erkannt werden, ob der Filter 12 vorhanden ist oder nicht. Zu einem oder mehreren Zeitpunkten kann jeweils ein Leistungswert für die elektrische Leistung des Ventilators 13 ermittelt werden. Abhängig von der aktuellen Drehzahl des Ventilators 13 kann eine Leistungskennlinie K aus einem Kennfeld ausgewählt oder basierend auf einer Referenzkennlinie R berechnet werden, die den Zusammenhang zwischen einer elektrischen Leistung des Ventilators 13 und einem Strömungsparameter der Ventilatoreinheit 11 beschreibt. Die Leistungskennlinie K bezieht sich daher nicht nur den Ventilator 13, sondern die gesamte Ventilatoreinheit 11. Dadurch ist eine eindeutige und ausreichend genaue Bestimmung des aktuellen Arbeitspunktes A der Ventilatoreinheit 11 ermöglicht.

Bezugszeichenliste:

| | |
|---|---|
| 10 | Ventilatorsystem |
| 11 | Ventilatoreinheit |
| 12 | Filter |
| 13 | Ventilator |
| 14 | rückwärts gekrümmter Radialventilator |
| 15 | Ventilatorrad |
| 16 | Ventilatorflügel |
| 17 | Gehäuse |
| 18 | Zuströmkanal |
| 19 | Abströmkanal |
| 20 | Elektromotor |
| | |
| 25 | Ventilatorsteuerung |
| 26 | Drehzahlsensor |
| 27 | Speicher |
| 28 | Schnittstelle |
| 29 | Kommunikationsnetzwerk |
| 30 | Kommunikationsmodul |
| 31 | Modem |
| 32 | Netzwerkverbindung |
| 33 | externe Recheneinheit |
| | |
| I | mehrdeutiger Leistungswertebereich |
| II | eindeutiger Leistungswertebereich |
| | |
| A | Arbeitspunkt |

| | |
|---|---|
| D | Drehachse |
| dp | Druckdifferenz |
| dp11 | unterer Druckdifferenzwert zum ersten Leistungswert |
| dp12 | oberer Druckdifferenzwert zum ersten Leistungswert |
| dp21 | unterer Druckdifferenzwert zum zweiten Leistungswert |
| dp22 | oberer Druckdifferenzwert zum zweiten Leistungswert |
| F | Abschnitt mit negativer Steigung |
| K | Leistungskennlinie |
| K1 | erste Leistungskennlinie |
| K2 | zweite Leistungskennlinie |
| K3 | dritte Leistungskennlinie |
| KV | Ventilatorkennlinie |
| n | Drehzahl |
| n1 | erste Drehzahl |
| n2 | zweite Drehzahl |
| n3 | dritte Drehzahl |
| P | Leistung |
| P1 | erster Leistungswert |
| P2 | zweiter Leistungswert |
| pa | Ausgangsdruck |
| pe | Eingangsdruck |
| R | Referenzkennlinie |
| S | Abschnitt mit positiver Steigung |

**Patentansprüche**

1. Verfahren zur Ermittlung eines Arbeitspunktes einer Ventilatoreinheit (11), die wenigstens einen Filter (12) und einen Ventilator (13) aufweist, wobei das Verfahren die folgenden Schritte aufweist:

   - Erzeugen einer Luftströmung durch den wenigstens einen Filter (12) mittels des Ventilators (13),
   - Bestimmen jeweils eines Leistungswertes (P1, P2) der elektrischen Leistung (P) des Ventilators (13) zu wenigstens einem Zeitpunkt,
   - Ermitteln oder Auswählen einer Leistungskennlinie (K) der Ventilatoreinheit (11), wobei die Leistungskennlinie (K) den Zusammenhang zwischen der elektrischen Leistung (P) des Ventilators (13) und einem Strömungsparameter der Ventilatoreinheit (11) charakterisiert, wobei die Leistungskennlinie (K) einen mehrdeutigen Leistungswertebereich (I) aufweist, in dem einem Leistungswert (P2) zwei mögliche Strömungsparameterwerte zugeordnet werden,
   - Bestimmen des aktuellen Arbeitspunktes (A) der Ventilatoreinheit (11) zumindest im mehrdeutigen Leistungswertebereich (I) abhängig von einem ersten Leistungswert (P1) zu einem ersten Zeitpunkt, einem zweiten Leistungswert (P2) zu einem zweiten Zeitpunkt und der Leistungskennlinie (K)

**dadurch gekennzeichnet, dass** der aktuelle Arbeitspunkt (A) außerdem unter Berücksichtigung der Annahme bestimmt wird, dass die Druckdifferenz (dp) durch die zunehmende Verschmutzung des Filters (12) mit der Zeit zunimmt und nicht abnimmt.

2. Verfahren nach Anspruch 1, wobei der Strömungsparameter eine Druckdifferenz (dp) zwischen einem Eingangsdruck (pe) und einem Ausgangsdruck (pa) der Ventilatoreinheit (11) oder ein Volumen- oder Massenstrom durch die Ventilatoreinheit (11) ist.

3. Verfahren nach Anspruch 1 oder 2, wobei das Bestimmen des aktuellen Arbeitspunktes (A) der Ventilatoreinheit (11) immer abhängig von dem ersten Leistungswert (P1) der elektrischen Leistung (P) des Ventilators (13), dem zweiten Leistungswert (P2) der elektrischen Leistung (P) des Ventilators (13) und der Leistungskennlinie (K) der Ventilatoreinheit (11) durchgeführt wird, unabhängig davon, ob der zweite Leistungswert (P2) innerhalb oder außerhalb des mehrdeutigen Leistungswertebereich (I) ist.

4. Verfahren nach Anspruch 1 oder 2, wobei dann, wenn der zweite Leistungswert (P2) außerhalb des mehrdeutigen Leistungswertebereich (I) in einem eindeutigen Leistungswertebereich (II) ist, bei der Bestimmung des aktuellen Arbeitspunktes (A) der Ventilatoreinheit (11) nur der zweite Leistungswert (P2) der elektrischen Leistung (P) des Ventilators verwendet wird.

5. Verfahren nach einem der vorhergehenden Ansprüche wobei der Ventilator (13) ein rückwärtsgekrümmter Radialventilator (14) ist.

6. Verfahren nach einem der vorhergehenden Ansprüche, wobei beim Bestimmen des aktuellen Arbeitspunktes (A) zusätzlich die Drehzahl (n) des Ventilators (13) berücksichtigt.

7. Verfahren nach Anspruch 6, wobei die Leistungskennlinie (K) aus einem Kennfeld von Leistungskennlinien (K1, K2, K3) basierend auf der Drehzahl (n1, n2, n3) ausgewählt wird.

8. Verfahren nach Anspruch 6 oder 7, wobei die Leistungskennlinie (K) abhängig von der Drehzahl (n) und einer vorgegebenen Referenzkennlinie (R) oder einer ausgewählten Leistungskennlinie (K) berechnet wird, wobei die Referenzkennlinie (R) den Zusammenhang zwischen der Leistung (P) des Ventilators (13) und dem Strömungsparameter der Ventilatoreinheit (11) für eine Referenzdrehzahl (n) des Ventilators (13) charakterisiert.

9. Verfahren nach einem der vorhergehenden Ansprüche, wobei der Ventilatoreinheit (11) eine konstante Solldrehzahl als Regelgröße vorgegeben wird.

10. Verfahren nach einem der vorhergehenden Ansprüche, wobei die Ventilatoreinheit (11) mit einer externen Recheneinheit (33) kommunikationsverbunden ist und wobei die externe Recheneinheit (33) dazu eingerichtet ist, den aktuellen Arbeitspunkt (A) zu bestimmen und/oder einen anderen Arbeitspunkt vorzugeben.

11. Ventilatorsystem (10) aufweisend wenigstens eine Ventilatoreinheit (11) und eine externe Recheneinheit (33), die mit der wenigstens einen Ventilatoreinheit (11) kommunikationsverbunden ist, wobei das Ventilatorsystem (10) dazu eingerichtet ist, das Verfahren nach einem der vorhergehenden Ansprüche durchzuführen.

12. Ventilatorsystem nach Anspruch 11, wobei die wenigstens einen Ventilatoreinheit (11) eine Ventilatorsteuerung (25) aufweist, die über ein Kommunikationsnetzwerk (29) mit einem Modem (31) kommunikationsverbunden ist.

13. Ventilatorsystem nach Anspruch 12, wobei das Modem (31) mit der externen Recheneinheit (33) kommunikationsverbunden ist.

14. Ventilatorsystem nach einem der Ansprüche 11 bis 13, wobei der Ventilator (13) ein rückwärtsgekrümmter Radialventilator (14) ist.

15. Ventilatorsystem nach einem der Ansprüche 11 bis 14, wobei der Ventilator (13) ein Ventilatorrad (15) und einen bürstenlosen Elektromotor (20) aufweist, der zur Drehung des Ventilatorrades (15) eingerichtet ist.

**Claims**

1. Method for determination of an operating point of a fan unit (11) that comprises at least one filter (12) and a fan (13), wherein the method comprises the following steps:

   - Creation of an airflow through the at least one filter (12) by means of a fan (13),
   - Determination of one power value (P1, P2) of the electrical power (P) of fan (13) at at least one point in time respectively,
   - Determination or selection of a power characteristic curve (K) of fan unit (11), wherein the power characteristic curve (K) characterizes the correlation between the electrical power (P) of fan (13) and a flow parameter of fan unit (11), wherein the power characteristic curve (K) comprises an ambiguous power value range (I) in which two possible flow parameter values are assigned to one power value (P2),

- Determination of the current operating point (A) of fan unit (11) at least in the ambiguous power value range (I) depending on a first power value (P1) at a first point in time, a second power value (P2) at a second point in time and the power characteristic curve (K),

**characterized in that** the current operating point (A) is determined in addition under the assumption that the pressure difference (dp) increases and does not decrease over time, due to the increasing pollution of filter (12).

2. Method according to claim 1, wherein the flow parameter is a pressure difference (dp) between an inlet pressure (pe) and an outlet pressure (pa) of fan unit (11) or a volume or mass flow rate through the fan unit (11).

3. Method according to claim 1 or 2, wherein the determination of the current operating point (A) of fan unit (11) is always carried out depending on the first power value (P1) of the electrical power (P) of fan (13), the second power value (P2) of the electrical power (P) of the fan (13) and the power characteristic curve (K) of fan unit (11), independent from whether the second power value (P2) is inside or outside the ambiguous power value range (I).

4. Method according to claim 1 or 2, wherein only the second power value (P2) of the electrical power (P) of the fan is used for the determination of the current operating point (A) of the fan unit (11) if the second power value (P2) is inside an unambiguous power value range (II) outside of the ambiguous power value range (I).

5. Method according to any of the preceding claims, **characterized in that** the fan (13) is a backward curved centrifugal fan (14).

6. Method according to any of the preceding claims, wherein in addition the speed (n) of fan (13) is considered for determination of the current operating point (A).

7. Method according to claim 6, wherein the power characteristic curve (K) is selected from a characteristic map of power characteristic curves (K1, K2, K3) based on the speed (n1, n2, n3).

8. Method according to claim 6 or 7, wherein the power characteristic curve is calculated based on the speed (n) and a predefined reference characteristic curve (R) or a selected power characteristic curve (K), wherein the reference characteristic curve (R) characterizes the correlation between the power (P) of the fan (13) and the flow parameter of the fan unit (11) for a reference speed (n) of the fan (13).

9. Method according to any of the preceding claims, wherein a constant desired speed is provided to the fan unit (11) as control variable.

10. Method according to any of the preceding claims, wherein the fan unit (11) is communicatively connected with an external computing unit (33) and wherein the external computing unit (33) is configured to determine the current operating point (A) and/or to set another operating point.

11. Fan system (10) comprising at least one fan unit (11) and an external computing unit (33) that is communicatively connected with the at least one fan unit (11), wherein the fan system (10) is configured to carry out the method according to any of the preceding claims.

12. Fan system according to claim 11, wherein the at least one fan unit (11) comprises a fan control (25) that is communicatively connected with a modem (31) via a communication network (29).

13. Fan system according to claim 12, wherein the modem (31) is communicatively connected with the external computing unit (33).

14. Fan system according to any of the claims 11 to 13, wherein the fan (13) is a backward curved centrifugal fan (14).

15. Fan system according to any of the claims 11 to 14, wherein the fan (13) comprises a fan impeller (15) and a brushless electric motor (20) that is configured for rotation of the fan impeller (15).

**Revendications**

1. Procédé pour déterminer un point de fonctionnement d'une unité de ventilateur (11) qui présente au moins un filtre (12) et un ventilateur (13), le procédé comprenant les étapes suivantes :

- génération d'un flux d'air à travers le filtre (12), au nombre d'au moins un, à l'aide du ventilateur (13),
- détermination, respectivement d'une valeur de puissance (P1, P2) de la puissance électrique (P) du ventilateur (13), à au moins un instant,
- détermination ou sélection d'une courbe caractéristique de puissance (K) de l'unité de ventilateur (11), ladite courbe caractéristique de puissance (K) caractérisant la relation entre la puissance électrique (P) du ventilateur (13) et un paramètre d'écoulement de l'unité de ventilateur (11), la courbe caractéristique de puissance (K) présentant une plage de valeurs de puissance ambiguë (I), dans laquelle deux valeurs de paramètres d'écoulement possibles sont associées à une valeur de puissance (P2),
- détermination du point de fonctionnement (A) actuel de l'unité de ventilateur (11), au moins dans la plage de valeurs de puissance ambiguë (I), en fonction d'une première valeur de puissance (P1) à un premier instant, d'une deuxième valeur de puissance (P2) à un deuxième instant, et de la courbe caractéristique de puissance (K),

**caractérisé en ce que** le point de fonctionnement (A) actuel est en outre déterminé en prenant en compte l'hypothèse selon laquelle la différence de pression (dp) due à l'encrassement progressif du filtre (12) augmente au fil du temps, et ne diminue pas.

2. Procédé selon la revendication 1, selon lequel le paramètre d'écoulement est une différence de pression (dp) entre une pression d'entrée (pe) et une pression de sortie (pa) de l'unité de ventilateur (11) ou un flux volumique ou massique traversant l'unité de ventilateur (11).

3. Procédé selon la revendication 1 ou 2, selon lequel la détermination du point de fonctionnement (A) actuel de l'unité de ventilateur (11) est toujours fonction de la première valeur de puissance (P1) de la puissance électrique (P) du ventilateur (13), de la deuxième valeur de puissance (P2) de la puissance électrique (P) du ventilateur (13) et de la courbe caractéristique de puissance (K) de l'unité de ventilateur (11), indépendamment du fait de savoir si la deuxième valeur de puissance (P2) se situe à l'intérieur ou à l'extérieur de la plage de valeurs de puissance ambiguë (I).

4. Procédé selon la revendication 1 ou 2, selon lequel, dans le cas où la deuxième valeur de puissance (P2) se situe à l'extérieur de la plage de valeurs de puissance ambiguë (I), dans une plage de valeurs de puissance univoque (II), seule la deuxième valeur de puissance (P2) de la puissance électrique (P) du ventilateur est utilisée lors de la détermination du point de fonctionnement (A) actuel de l'unité de ventilateur (11).

5. Procédé selon une des revendications précédentes, selon lequel le ventilateur (13) est un ventilateur radial (14) courbé vers l'arrière.

6. Procédé selon une des revendications précédentes, selon lequel, en outre, la vitesse de rotation (n) du ventilateur (13) est prise en compte lors de la détermination du point de fonctionnement (A) actuel.

7. Procédé selon la revendication 6, selon lequel la courbe caractéristique de puissance (K) est sélectionnée dans un diagramme caractéristique de courbes caractéristiques de puissance (K1, K2, K3), sur la base de la vitesse de rotation (n1, n2, n3).

8. Procédé selon la revendication 6 ou 7, selon lequel la courbe caractéristique de puissance (K) est calculée en fonction de la vitesse de rotation (n) et d'une courbe caractéristique de référence (R) prédéfinie ou d'une courbe caractéristique de puissance (K) sélectionnée, la courbe caractéristique de référence (R) caractérisant la relation entre la puissance (P) du ventilateur (13) et le paramètre d'écoulement de l'unité de ventilateur (11) pour une vitesse de rotation de référence (n) du ventilateur (13).

9. Procédé selon une des revendications précédentes, selon lequel une vitesse de rotation de consigne constante est prédéfinie en tant que grandeur réglée pour l'unité de ventilateur (11).

10. Procédé selon une des revendications précédentes, selon lequel l'unité de ventilateur (11) est reliée sur le plan de la communication à une unité de calcul (33) externe, et selon lequel l'unité de calcul (33) externe est conçue pour déterminer le point de fonctionnement (A) actuel et/ou prédéfinir un point de fonctionnement différent.

11. Système de ventilateur (10) présentant au moins une unité de ventilateur (11) et une unité de calcul (33) externe qui est reliée sur le plan de la communication à l'unité de ventilateur (11), au nombre d'au moins une, le système de ventilateur (10) étant conçu pour mettre en œuvre le procédé selon une des revendications précédentes.

12. Système de ventilateur selon la revendication 11, selon lequel l'unité de ventilateur (11), au nombre d'au moins une, présente une commande de ventilateur (25) qui est reliée sur le plan de la communication à un modem (31), via un réseau de communication (29).

13. Système de ventilateur selon la revendication 12, selon lequel le modem (31) est relié sur le plan de la communication à l'unité de calcul (33) externe.

14. Système de ventilateur selon une des revendications 11 à 13, selon lequel le ventilateur (13) est un ventilateur radial (14) courbé vers l'arrière.

**15.** Système de ventilateur selon une des revendications 11 à 14, selon lequel le ventilateur (13) présente une roue de ventilateur (15) et un moteur électrique (20) dépourvue de balais, qui est conçu pour la rotation de la roue de ventilateur (15).

**Fig. 1**

**Fig. 2**

**Fig. 3**

**Fig. 4**

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2620202 B1
- US 20030052791 A1
- US 8672733 B2
- US 20030070544 A1
- US 20050247194 A1
- DE 102015012462 B3
- US 8346507 B2
- DE 102018211869 A1
- DE 4329346 A1
- WO 2019166448 A1